# EUROPÄISCHE PATENTSCHRIFT

(11) **EP 3 453 914 B1**
(45) Veröffentlichungstag und Bekanntmachung des Hinweises auf die Patenterteilung: **02.06.2021**
(21) Anmeldenummer: 17190643.1
(22) Anmeldetag: 12.09.2017
(51) Int. Cl.: F16G 11/10, H02G 3/00, B66B 7/06

(54) **STEIGLEITUNG, INSTALLATIONSSATZ UND ELEKTRISCHE INSTALLATION**
RISER, INSTALLATION KIT AND ELECTRIC INSTALLATION
COLONNE MONTANTE, ENSEMBLE D'INSTALLATION ET INSTALLATION ÉLECTRIQUE

(43) Veröffentlichungstag der Anmeldung: 13.03.2019
(73) Patentinhaber: Woertz Engineering AG, 4132 Muttenz (CH)
(72) Erfinder: ONODI, Tamas, 8800 Thalwil (CH); DREIER, Andreas, 4208 Nunningen (CH)
(74) Vertreter: Samson & Partner Patentanwälte mbB

(56) Entgegenhaltungen:
- EP-A2- 0 296 537
- DE-A1- 2 333 392
- DE-A1-102006 031 912
- DE-A1-102006 043 276
- DE-A1-102010 014 530
- Lanz Oensingen Ag: "Lanz - im Tunnel zuhause 1.6", , 31. Juli 2017 (2017-07-31), XP055455691, Gefunden im Internet: URL:http://www.lanz-oens.com/fileadmin/kat aloge_pdfs/LANZ_Tunnel_1.6.pdf [gefunden am 2018-03-01]

## Beschreibung

### GEBIET DER ERFINDUNG

Die Erfindung betrifft eine gegen Abwärtsbewegung gesicherte Steigleitung mit Brandfunktionserhalt E90, die im Brandfall durch wirksame Abstützung auch beim Schmelzen oder Abbrennen von Kabelisolierungen einer elektrischen Steigleitung den Funktionserhalt sicherstellt.

### HINTERGRUND DER ERFINDUNG

Elektrische Steigleitungen stellen in oder an Bauwerken eine versorgungstechnisch relevante Zufuhr von elektrischem Strom über elektrische Leitungen sicher. Zumeist werden von der Gebäudehauptversorgung ausgehend die jeweiligen Hauptanschlüsse vertikal in die verschiedenen Gebäudegeschosse geleitet und von dort in Nebenanschlüsse verzweigt. So tragen elektrische Steigleitungen grundlegend zum Funktionserhalt der Gebäudetechnik, sowie der notwendigen sicherheitstechnischen Anlagen bei.

Aufgrund dieser besonderen Bedeutung gelten für elektrische Steigleitungen grundlegende Anforderungen an den Funktionserhalt. Diese müssen so beschaffen sein, dass die sicherheitstechnischen Anlagen und Einrichtungen, welche auf Stromversorgung angewiesen sind auch im Brandfall ausreichend lang funktionsfähig bleiben. Zu den eben genannten sicherheitstechnischen Anlagen und Einrichtungen gehören beispielsweise Sicherheitsbeleuchtungen, Brandfallsteuerung von Personenaufzügen, Brandmeldeanlagen, Anlagen zur Alarmierung und Erteilung von Anweisungen.

Eine elektrische Leitungsanlage, setzt sich aus ein oder mehreren elektrischen Kabeln und einer Tragkonstruktion zusammen. Die elektrischen Kabel sind entsprechend DIN VDE 0100-520 und DIN 4102-12 durch die Tragkonstruktion abzustützen. Sieht die Tragkonstruktion die Verlegung eines elektrischen Kabels in vertikaler Richtung vor, spricht man von einer elektrischen Steigleitung. In einer sogenannten Steigleitungstrasse kann eine Vielzahl von Steigleitungen parallel vertikal durch ein Gebäude geführt werden.

Gerade in großen Gebäuden werden eine Vielzahl elektrischer Steigleitungen in Ausführung als Strom- oder Datenkabel parallel benötigt. In diesem Fall werden anstelle üblicher Rundkabel auch Flachkabel verwendet die um die 90 Leitungsadern parallel nebeneinander führen können.

Nach DIN VDE 0100-520 Abschnitt 522.8.1.4 gilt bei einer andauernden Zugbeanspruchung auf Kabel und Leitungsanlagen, z.B. durch das Eigengewicht, dass bei senkrechter Verlegung die Leitungsbauart, der Querschnitt und die Befestigungsart geeignet sein müssen um, wie es in Abschnitt 522.8.1.3 heißt, eine Beschädigung durch das Eigengewicht wirksam zu vermeiden. In Steigtrassen werden daher Steigleitungen in der Regel jeweils separat mit Kabelschellen in vorgegebenen Abständen an geeigneten Wänden fixiert. Der Abstand ist abhängig vom Gewicht des Kabels pro Meter.

Tragkonstruktionen für Steigtrassen die nicht direkt an der Wand befestigt werden bestehen im Allgemeinen aus einer Steigleiter bei dem an zwei senkrechten Halteschienen waagerecht im Abstand von höchstens 300 mm Sprossen oder Profilschienen befestigt sind. Die Kabel in der Steigrasse sind mit geeigneten Einzel- oder Bügelschellen auf jeder Sprosse oder Profilschiene abgestützt.

Anders als bei horizontaler Verlegung, bei der elektrische Leitungen auf ihren Tragkonstruktionen zu Gruppen vieler Kabel in Kabelkanälen zusammengefasst werden können, müssen vertikal geführte elektrische Kabel entweder vereinzelt durch Einzelschellen fixiert werden, oder können im Falle von Rundkabeln mit Bügelschellen mit bis zu drei Kabeln zusammen gefasst werden, wobei jedoch der Abstand der elektrischen Kabel in der Bügelschelle dem Abstand bei der Verlegung von Einzelschellen entsprechen muss.

Im Kontext der Befestigung elektrischer Leitungen, im Besonderen aber bei der Verlegung elektrischer Steigleitungen finden in der Regel Kabelschellen in Form von Einzel- oder Bügelschellen mit entsprechender Klemmwirkung Anwendung. Kabelschellen sind sowohl für Rund- als auch für Flachkabel bekannt. Eine Kabelschelle funktioniert nach dem Klemmprinzip. Sie umfasst das Kabel so, dass die Isolierung des Kabels fest umschlossen ist. Die Größe der zu verwendenden Kabelschelle ist dabei abhängig vom Kabeldurchmesser um die geforderte Abstützung sicherzustellen. Die Entlastung des Gewichts entsteht durch die Befestigung der Schelle an der Tragkonstruktion oder an der Wand. Bei einer Bügelschelle sind mehrere solcher Einzelschellen zu einer Einheit kombiniert, welche ihrerseits an der Tragkonstruktion oder Wand befestigt wird. Eine Bügelschelle darf auf diese Weise bis zu drei Kabel aufnehmen, wobei der Radius eines einzelnen Kabels, im Falle von Rundkabeln maximal 25mm betragen darf. Anstatt einer das Kabel ganz umschließenden Schelle, sind auch Schellen bekannt, welche eine Öffnung nach einer Seite hin aufweisen. Diese werden auf das Kabel gelegt und in der Regel unter Verwendung von Schrauben an der Wand fixiert, so dass das Kabel zwischen Wand und Schelle geklemmt wird.

Darüber hinaus sind allgemein Klemmvorrichtungen für unterschiedliche Klemmgüter beispielsweise bekannt aus DE102006021555(A1), EP0296537 (A2), US4318563(A) oder auch DE10240551(A1).

Ebenfalls bekannt sind DE 23 33 392 A1 und DE 10 2010 014530 A1.

DE 23 33 392 A1 betrifft eine Halteklammer für Flachbandkabel mit zwei Zugentlastungsseilen, insbesondere für Aufzugssteuerleitungen, bei der eine keilförmige Verklemmung des Flachbandkabels erfolgt.

DE 10 2010 014530 A1 betrifft eine Flachbandkabel-Umlenkvorrichtung mit Funktionserhalt bei Brand, welche einen zylindrischen Kabelumlenkkörper aus feuerbeständigem isolierenden Material umfasst, sowie eine Halterung für einen zylindrischen Kabelumlenkkörper aus feuerbeständigem Material aufweist. Die Halterung ist so vom zylindrischen Kabelumlenkkörper beabstandet, dass sie dessen Umschlingung mit dem Flachkabel erlaubt, ohne dieses zu berühren. Eine elektrische Installation ist aus wenigstens einer derartigen Umlenkvorrichtung und einem Flachkabel aufgebaut, das über die Umlenkvorrichtung läuft und an ihr seine Richtung ändert, wobei die Kabelquerrichtung vor und nach der Umlenkvorrichtung horizontal verläuft und wobei das Flachkabel den zylindrischen Kabelumlenkkörper wenigstens teilweise umschlingt.

Zur Erfüllung von Brandschutzbestimmungen gelten die Prüfanforderungen für elektrische Leitungsanlagen nach DIN 4102-12 mit den Funktionserhaltungsklassen E30, E60 und E90. So muss beispielsweise in sicherheitstechnischen Anlagen eine Feuerwiderstandsdauer von 90 Minuten (E90) der elektrischen Leitungsanlage sichergestellt sein. Die tatsächliche Feuerwiderstandsdauer einer Leitungsanlage wird sowohl von der Beschaffenheit des Kabels, als auch der Tragkonstruktion der elektrischen Leitungsanlage bestimmt.

Abhängig von der Beschaffenheit und Führung eines Kabels, sowie des Versorgungsaufbaus werden grundsätzlich zwei Formen von Tragkonstruktionen mit Brandfunktionserhalt unterschieden. Eine *Normtragkonstruktion* setzt die in DIN 4102-12 definierten Parameter in Abhängigkeit festgelegter Randbedingungen unmittelbar um. Eine *kabelspezifische Tragkonstruktion* stellt eine geprüfte Kabelanlage auf der Basis von DIN 4102-12 mit definierten Abweichungen dar.

Eine besondere Anforderung nach DIN 4102-12 8.3 gilt für Steigleitungen. Hier muss eine wirksame Abstützung des Kabels mit Funktionserhalt im Brandfall erfolgen. Damit soll sichergestellt werden, dass die elektrische Leitungsanlage als Gesamtkonstruktion in ihrer Funktionserhaltungsklasse Bestand hat. Steigleitungen sind hier besonders gefährdet. Zwar müssen Kabel der Steigleitung bereits aufgrund ihres großen Gewichtes in geeigneten Abständen gestützt und entlastet werden um ein Abreißen der Leitung zu verhindern, im Brandfall jedoch ist die nach DIN VDE 0100-520 geforderte Abstützung durch Einzel- und Bügelschellen nicht mehr ausreichend gegeben. Da die Kabelisolation im Brandfall schmilzt, verringert sich der Durchmesser des Kabels. Die dem Kabeldurchmesser bei der Verlegung angepassten Kabelschellen können dann ein Durchrutschen nicht mehr verhindern. Das Eigengewicht des Kabels ist somit nicht mehr abgestützt, Um nach DIN 4102-12 8.3 eine wirksame Unterstützungsmaßnahme (WUM) zu erreichen, sind im Allgemeinen folgende Lösungen aus der genannten Norm bekannt:
1. Zusätzlich zur generellen Abstützung durch Kabelschellen in vorgegebenen Abständen erfolgt eine Abstützung des Kabels durch einen seitlichen, horizontal verlaufenden Vorsprung von mindestens 300 mm nach jeweils 3500 mm vertikalem Abstand der Steigtrasse (mäanderförmige Verlegart). Die Abstützung durch eine mäanderförmige Verlegart, setzt entsprechenden Platz in der Umgebung der Steigleitung voraus. Sie wird von vorneherein in die Planung der Steigtrasse mit einbezogen.
2. Zusätzlich zur generellen Abstützung nach DIN VDE 0100-520 durch Kabelschellen in vorgegebenen Abständen ist die Montage einer Zugentlastung in Steigtrassen bekannt. Diese Zugentlastung besteht aus einem feuerbeständigen Aufsatz, in der Regel aus Mineralfaserplatten, der im vorgegebenen Abstand von 3500 mm auf die Steigtrasse montiert wird. Da an dieser Zugentlastung durch die Abstandsregelung nur das Kabelgewicht von 3500 mm hängt, soll hierdurch die Reißgefahr des Kabels auch im Brandfall vermindert werden. Die Zugentlastung basiert auf dem Prinzip der Wärmeisolation. Indem die Befestigungspunkte, an denen die Steigleitungen mit Kabelschellen fixiert sind durch eine hitzebeständige Abdeckung geschützt werden, soll das Schmelzen oder Abbrennen der Leitungsisolierung an den Befestigungspunkten hinausgezögert werden.

### KURZFASSUNG DER ERFINDUNG

Ein erster Aspekt der Erfindung betrifft eine gegen Abwärtsbewegung gesicherte Steigleitung, mit einem vertikal oder mit Vertikalkomponente verlaufenden elektrischen Steigleitungs-Flachkabel und wenigstens einer das Flachkabel umfassenden Steigleitungssicherungs-Vorrichtung zur Sicherung des Steigleitungs-Flachkabels gegen Abwärtsbewegung im Nichtbrandfall, sowie im Brandfall durch Andruck des Flachkabels gegen eine nicht-leitende Andruckfläche. Die Steigleitungssicherungs-Vorrichtung umfasst ein elektrisch nicht leitendes, feuerbeständiges Klemmelement im Abstand zur Andruckfläche, das frei beweglich in einer Schrägführung geführt ist, die bei Abwärtsbewegung des Klemmelements den Abstand des Klemmelements zur Andruckfläche verringert. Das bei auf das Flachkabel wirkender Abwärts-Zugkraft das Flachkabel durch das in der Schrägführung frei bewegliche und dadurch gegenüber der Andruckfläche abstandsvariable Klemmelement ist auch bei Änderung der Kabeldicke gegen die Andruckfläche drückbar und hierdurch zwischen Klemmelement und Andruckfläche klemmbar. Die Abstandsvariabilität der Klemmung entspricht wenigstens dem Unterschied zwischen der Dicke des Flachkabels im unversehrten Zustand und der Dicke des Flachkabels im Zustand abgeschmolzener oder abgebrannter Kabelisolation.

Ein anderer Aspekt betrifft eine elektrische Installation, umfassend eine gegen Abwärtsbewegung gesicherte Steigleitung, mit einem vertikal oder mit Vertikalkomponente verlaufenden elektrischen Steigleitungs-Flachkabel und wenigstens einer das Flachkabel umfassenden Steigleitungssicherungs-Vorrichtung gemäß dem ersten Aspekt, wobei die Steigleitungssicherungs-Vorrichtung an einer Bauwerkswand montiert ist, die die isolierende Andruckfläche als Gegenstück zum Klemmelement bildet, oder die Steigleitungssicherungs-Vorrichtung mit einer isolierende Andruckfläche als Gegenstück zum Klemmelement ausgerüstet ist, die einen Teil der Steigleitungssicherungs-Vorrichtung selbst bildet.

### ALLGEMEINE ERLÄUTERUNG, AUCH BETREFFEND FAKULTATIVE AUSGESTALTUNGEN DER ERFINDUNG

Der erste Aspekt betrifft eine gegen Abwärtsbewegung gesicherte Steigleitung umfasst eine Haltevorrichtung und ein nicht leitendes, feuerbeständiges Klemmelement. Die Haltevorrichung wiederum umfasst einen Bügel und eine Befestigungsvorrichtung. Der Bügel ist beispielsweise aus nicht rostendem Stahl gefertigt (Nirobügel). Die Befestigungsvorrichtung dient der Installation der Steigleitungssicherungs-Vorrichtung auf einem feuerfesten Hintergrund als nicht-leitende Andruckfläche. Das Steigleitungs-Flachkabel kann zwischen deder nicht-leitenden Andruckfläche und dem Bügel der Haltevorrichtung durchgeführt werden. Ein nicht leitendes, feuerbeständiges Klemmelement kann über eine durch das Klemmelement geführte Achse des Klemmelements so in eine Schrägführung der Haltevorrichtung eingehängt werden, dass bei Abwärtsbewegung des Klemmelements der Abstand des Klemmelements zur Andruckfläche verringert wird. Dadurch wird das Steigleitungs-Flachkabel auch bei Abschmelzen oder Abbrennen der Kabelisolierung zwischen dem nicht leitenden, feuerbeständigen Klemmelement und der nicht-leitenden Andruckfläche geklemmt wird.

Die Klemmung erfolgt derart, dass durch die auf das Flachkabel wirkende Abwärts-Zugkraft das Flachkabel durch das in der Schrägführung frei bewegliche und dadurch gegenüber der Andruckfläche abstandsvariable Klemmelement auch bei Änderung der Kabeldicke gegen die Andruckfläche drückbar und hierdurch zwischen Klemmelement und Andruckfläche klemmbar ist.. Im Brandfall schmilzt die Kabelisolierung. Da das Klemmelement abstandsvariabel und frei beweglich in dem Bügel verankert ist, rutscht es durch seine Gewichtskraft entsprechend des veränderten Umfangs des Kabels nach und erhält die Klemmwirkung auch bis zur vollständigen brandbedingten Abisolierung von Leiteradern des Steigleitungs-Flachkabels aufrecht.

Das Klemmelement drückt das Flachkabel gegen die Andruckfläche. Es bewirkt somit einen durch Reibung verursachten Widerstand zwischen dem Steigleitungs-Flachkabel und der Andruckfläche gegen das Durchrutschen des Flachkabels und Verrutschen von im Brandfall abisolierten Kabeladern. Hierzu ist der Winkel der Schrägführung relativ zur Andruckfläche ausreichend klein, d.h. ausreichend spitz gewählt, um die benötigte Haftreibung zum Erzeugen des Widerstands herbei zu führen. Dadurch setzt sich die auf das Flachkabel wirkende Abwärts-Zugkraft in Klemmkraft um, so dass z.B. eine Erhöhung der Zugkraft eine entsprechende Erhöhung der Klemmkraft bewirkt, aber nicht etwa ein Öffnen der durch das Klemmelement und die Schrägführung gebildeten Steigleitungssicherung.

Dabei ist Reibung zwischen dem Flachkabel und dem Klemmelement für die Klemmwirkung nicht erforderlich. Das Klemmelement ist daher als frei drehbare Klemmrolle ausgeführt, die selbst keine oder nur eine geringe Reibhemmung gegenüber dem Steigleitungs-Flachkabel bewirkt. Vielmehr hat sie im Wesentlichen die Funktion das Flachkabel gegen die Andruckfläche zu drücken, so dass im Wesentlichen nur die durch diese Andruckkraft verursachte Reibung zwischen Flachkabel und Andruckfläche das Durchrutschen des Steigleitungs-Flachkabels verhindert.

Die Steigleitung kann ohne seitliche Verlegung oder Wärmeisolierung ununterbrochen durch die auch im Brandfall anhaltende Klemmwirkung der Steigleitungssicherungs-Vorrichtung wirksam unterstützt werden. Die Möglichkeit der durchgängig vertikalen Verlegung mit der Steigleitungssicherungs-Vorrichtung hat bei Steigleitungen mit Flachkabeln den Effekt, dass das Kurzschlussvermeidungs-Verhalten von Flachkabeln erhalten bleibt, Während die voneinander durch eine eigene Isolierung getrennten Leitungsadern in einem Rundkabel miteinander verdrillt sind, und beim Schmelzen oder Abbrennen der Aderisolation die Kreuzungspunkte der Leitungsadern leicht zu einem Kurzschluss führen, verhält sich ein Flachkabel durch Fehlen dieser Kreuzungspunkte aufgrund der parallelen Führung der Kabeladern wesentlich günstiger. Im Brandfall kann die günstige parallele Führung jedoch nur dann wirksam aufrechterhalten werden, wenn das Flachkabel durchgängig vertikal verlegt ist. Wird das Flachkabel horizontal verlegt, so würden im Brandfall die einzelnen Leitungsadern beim Schmelzen oder Abbrennen der Aderisolierung durch ihr eigenes Gewicht von oben nach unten zueinander hingezogen werden, so dass diese sich unter Umständen berühren und die Gefahr eines Kurzschlusses erhöht ist.
Da jede Steigleitung in einer Steigtrasse mit jeweils eigenen Steigleitungssicherungs-Vorrichtungen durchgängig vertikal gesichert wird, besteht keine Einschränkung auf eine maximal ausführbare Breite der Steigtrasse oder zusätzliche Platzressourcen durch horizontal verlegte Abschnitte.

Bei der Befestigung und Sicherung von Steigleitungen die als Flachkabel vorliegen, ermöglicht die Steigleitungssicherungs-Vorrichtung wie oben beschrieben eine durchgängig, vertikale Installation, die für die Aufrechterhaltung des Kurzschlussvermeidungs-Verhaltens günstig ist. Zum andern verhindert das Klemmelement selbst beim vollständigen Schmelzen oder Abbrennen der Aderisolierungen des Flachkabels ein Verrutschen und Berühren der einzelnen Kabeladern. Manche Ausgestaltungen des Klemmelements und der Haltevorrichtung wirken zusätzlich unterstützend auf diesen Aspekt des Funktionserhalts des Flachkabels, indem die Kabeladern voneinander getrennt fixiert werden und eine Berührung mit dem Bügel unterbunden wird.

Die Befestigungsvorrichtung erlaubt in ihren verschiedenen Ausgestaltungen eine Installation der Steigleitungssicherungs-Vorrichtung bei neu zu verlegenden Steigleitungen und Steigtrassen alternativ zur Verwendung von herkömmlichen Kabelschellen ebenso, wie die nachträgliche Sicherung von bereits vorhandenen Steigleitungen und Steigtrassen. Zusätzlich unterstützt sie die Installation durch einfache Montageprinzipien in beiden Fällen. Dabei kann die Steigleitung, über die Befestigungsvorrichtung, je nach Ausgestaltung, an einen Hintergrund in Form einer Wand die den Feuerschutzrichtlinien genügt, als auch an einer Profilschiene in einer Steigtrasse gesichert werden.

Bei der Installation kann jeweils eine Steigleitungssicherungs-Vorrichtung in dem durch DIN 4102-12 vorgegebenen Abstand bis zur Gesamthöhe der Steigleitung an der Wand mit Schrauben befestigt werden. Danach kann das Steigleitungs-Flachkabel von unten nach oben durch die einzelnen Steigleitungssicherungs-Vorrichtungen gezogen werden. Dabei werden die Klemmelemente beim Hochschieben des Steigleitungs-Flachkabels nach oben hin ausgelenkt, so dass das Steigleitungs-Flachkabel nicht behindert wird. Wird das Steigleitungs-Flachkabel losgelassen, bewegt sich das abstandsvariabel und frei bewegliche Klemmelement nach unten, und klemmt das Steigleitungs-Flachkabel an der Wand. Auf diese Weise kann es stückweise nach oben gezogen werden, ohne bei der Installation herunter zu fallen oder durchzurutschen.

Eine andere Montagemethode kommt zum Einsatz, wenn das Steigleitungs-Flachkabel bereits von einem oberen Befestigungspunkt herab hängt oder die Steigleitung bereits verlegt ist, jedoch zusätzlich durch die Steigleitungssicherungs-Vorrichtung abgestützt werden soll. In diesem Fall wird die Steigleitungssicherungs-Vorrichtung direkt auf dem bereits herunterhängenden oder bereits verlegten Kabel angebracht.

Erfindungsgemäß ist das Klemmelement als Klemmrolle ausgeführt, welche durch eine Achse in die Haltevorrichtung in die Schrägführung eingehängt ist. Die Klemmrolle ist dabei in manchen Ausgestaltungen als einteilige Klemmrolle ausgebildet.

Eine weitere Ausgestaltung der Erfindung ist die Ausführung des Klemmelements als mehrteilige Klemmrolle, Die Ausgestaltung der Haltevorrichtung ist dabei dieselbe wie bei der einteiligen Klemmrolle. Auf der Achse des Klemmelements sind mehrere, nebeneinander angeordnete, unabhängige Einzelklemmrollen aufgereiht. Die einzelnen Rollen verfügen in ihrem Zentrum über eine zylinderförmige Aussparung mit einem inneren Durchmesser. Der innere Durchmesser, ist im Vergleich zum Durchmesser der Achse so groß, dass es einen Abstand zwischen der Achse und der Innenseite der jeweiligen Rolle gibt, so dass die Rollen auf der Achse gleichzeitig unterschiedliche Höhen in der Haltevorrichtung einnehmen können. So sind die einzelnen Rollen unabhängig voneinander abstandsvariabel und frei beweglich. Im Falle eines ungleichmäßigen Schmelzens oder Abbrennen der Aderisolierung des Flachkabels oder bei Verschmutzungen, werden einzelne Abschnitte des Flachkabels einzeln geklemmt, und können somit eine Abstützung, angepasst an die gegebenen Unebenheiten, gewährleisten. Zusätzlich wird durch die separate Klemmung die Eigenschaft der Verminderung der Kurzschlusswahrscheinlichkeit von Flachkabeln zusätzlich unterstützt, da jede Einzelklemmrolle im Fall der brandbedingten Abisolation für sich separat an einer abgeschmolzenen Aderisolationsbereich anliegt-je nachdem wie viel der Aderisolation in einem Bereich abgeschmolzen ist, stellt sich die individuelle Höhe der Einzelklemmrollen in der Haltevorrichtung ein.

In manchen Ausgestaltungen umfasst die Haltevorrichtung einen Kabelbinder, wobei die Klemmelement mittels des Kabelbinders bei der Montage der Steigleitungssicherungs-Vorrichtung an der Steigleitung in einer obersten Position der Schrägführung gehalten werden kann.

Im Falle einer Ausgestaltung mit einer einfach oder mehrfach Klemmrolle, kann so das Klemmelement mittels des Kabelbinders für die Montage in der obersten Position einer Schrägführung gehalten werden um die Montage nicht zu behindern. Um denselben Zweck zu erreichen, kann sich in manchen Ausführungsformen alternativ eine Einhängemechanismus, beispielsweise als Einhängefortsatz der Schrägführung ausgebildet, an die Schrägführung der Haltevorrichtung anschließen, in welche die Achse der Klemmrolle in einer Position oberhalb der Schrägführung eingehängt werden kann.

Nach Montage wird dieser Kabelbinder durchtrennt bzw. wird die Achse der Klemmrolle aus der Einhängekulisse gehoben und wieder in der Schrägführung platziert und die Steigieitungssicherungs-Vorrichtung wird ausgelöst, in dem das Klemmelement durch seine abstandsvariabele und freie Beweglichkeit innerhalb der Schrägführung in die Klemmposition rutscht.

Bei einer Ausgestaltung der Erfindung, in welcher das Klemmelement als einteilige oder mehrteilige Klemmrolle ausgeführt ist, kann für eine Straffung des Steigleitungs-Flachkabels bei der Installation der Steigleitung die Steigleitungssicherungs-Vorrichtung mit einer Schraubensicherung ausgestattet sein. Die Klemmrolle wird durch eine Sicherungsschraube in Richtung der Schrägführung, in welcher die Klemmrolle abstandsvariabel und frei beweglich aufgehängt ist, in Aufwärtsrichtung in ihrer Auslenkung begrenzt. Um bei der Installation einer Steigleitung das Steigleitungs-Flachkabel zwischen zwei Steigleitungssicherungs-Vorrichtungen zu spannen, lässt sich das Durchziehen des Steigleitungs-Flachkabels durch Schließen der Schraubensicherung der unteren Steigleitungssicherungs-Vorrichtung verhindern um eine Straffung herbei zu führen. Beim Schließen der Schraubensicherung wird die Sicherungsschraube bei ausgelöster Steigleitungssicherungs-Vorrichtung so weit eingebracht, dass sie das Klemmelement berührt und dieses somit nicht nach oben ausgelenkt werden kann. So kann das Steigleitungs-Flachkabel im oberen Bereich gezogen werden, ohne dass sich die Fixierung an der unteren Steigleitungssicherungs-Vorrichtung nach oben hin löst.

Umfasst die Haltevorrichtung einen Kabelbinder zur Erleichterung der Montage und eine Schraubensicherung, so erfolgt die Justierung des Steigleitungsflachkabels mittels der Schraubensicherung nach Auslösen der Steigleitungssicherungs-Vorrichtung durch die Durchtrennung des Kabelbinders.

In einer anderen Ausgestaltung der Erfindung ist das Klemmelement als exzentrisches Klemmelement ausgeführt, welches durch eine Achse stufenlos rotationsbeweglich an der Haltevorrichtung befestigt ist. Die Achse des Klemmelements ist an einer festen Position in der Haltevorrichtung angebracht. Das exzentrische Klemmelement ist dabei in manchen Ausführungsformen als Einzelklemmelement ausgeführt. In wieder anderen Ausführungsformen ist das exzentrische Klemmelement als mehrteiliges exzentrisches Klemmelement, umfassend mehrere exzentrische Einzelklemmelemente.

Die exzentrischen Einzelklemmelemente können, ebenso wie die Mehrfachklemmrolle, die Adern der Steigleitung in unterschiedliche Höhen abklemmen und dadurch eine Abstützung angepasst an brandbedingte Unebenheiten der Steigleitungsoberfläche gewährleisten. Da die Achse, an welcher das Klemmelement aufgehängt ist, an einer festen Position der Haltevorrichtung angebracht ist, ist sie vor Blockierung der Klemmung in einer Schrägführung durch herabfallenden Schutt oder herumfliegende Partikel im Brandfall zusätzlich geschützt.

Der Brand-Funktionserhalt wird bei Steigleitungen mit Flachkabeln durch eine Ergänzung der Steigleitungssicherungs-Vorrichtung mit einer nicht leitenden, feuerbeständigen Grundplatte, beispielsweise aus Keramik, zusätzlich unterstützt. Die Grundplatte wird bei der Montage zwischen Andruckfläche und Flachkabel platziert und zusammen mit der Steigleitungssicherungs-Vorrichtung durch Schrauben der entsprechenden Feuerschutzklasse befestigt. Sie weist, zwei senkrecht verlaufende nicht leitende, feuerbeständige Schienen, beispielsweise aus Keramik auf, deren Abstand voneinander etwas geringer ausfällt als die Breite des Bügels der Haltevorrichtung. So können Sie bei der Montage jeweils zwischen den Seitenwänden des Bügels der Haltevorrichtung und dem Flachkabel platziert werden. Auf diese Weise wird im Brandfall beim Abschmelzen oder Abbrennen der Aderisolierung des Flachkabels verhindert, dass die abisolierten Leiter mit dem Bügel der Haltevorrichtung in Kontakt kommen und somit einen Kurzschluss auslösen.

Bei der Montage der Steigleitungssicherungs-Vorrichtung mit Grundplatte im Falle einer bereits herabhängenden oder verlegten Steigleitung wird zunächst eine Grundplatte unter dem Flachkabel platziert und die Montage sodann von oben weiter ausgeführt, indem die Steigleitungssicherungs-Vorrichtung von oben über dem Kabel und durch die Grundplatte verschraubt wird.

In einer Ausgestaltung der Erfindung, kann die Steigleitungssicherungs-Vorrichtung auf einer Profilschiene befestigt werden. Die Profilschiene bildet hier einen feuerfesten Hintergrund als Befestigungsbasis für die nicht-leitende, ebenfalls feuerfeste Andruckfläche. Dazu wird die Steigleitungssicherungs-Vorrichtung mit einer nicht leitenden, feuerbeständigen Verdrehsicherung, beispielsweise aus Keramik, ergänzt. Für die Fixierung an der Profilschiene weist die Befestigungsvorrichtung eine Hakenausformung auf. Die Verdrehsicherung wird auf der Profilschiene durch eindrehen fixiert. Sie verfügt an den Rändern senkrecht zum Kabelverlauf über jeweils eine nicht leitende, feuerbeständige Schiene, beispielsweise aus Keramik, welche das Steigleitungs-Flachkabel in der korrekten Position, also nicht verdrehten Position, innerhalb der Steigleitungssicherungs-Vorrichtung hält. Dies schützt im Brandfall abisolierte Leitungsadern vor Kontakt mit der Profilschiene oder dem Bügel der Haltevorrichtung und vor einem daraus folgenden Kurzschluss. Mit der Hakenausformung der Befestigungsvorrichtung wird die Steigleitungssicherungs-Vorrichtung der in die Profilschiene eingehakt.

Auch bei dieser Ausgestaltung der Erfindung ist sowohl eine Neuinstallation der Steigleitung bei der Montage möglich als auch eine nachträgliche Montage bei bereits hängender oder bestehender Steigleitung. Die Montage folgt in beiden Fällen den bereits beschriebenen Prinzipien.

### KURZE BESCHREIBUNG DER ZEICHNUNG

Die angefügte Zeichnung veranschaulicht konkrete Ausführungsbeispiele verschiedener Aspekte der Erfindung. Hierbei zeigen
- Fig. 1:: Explosionszeichnung eines Aufbaus der Steigleitungssicherungs-Vorrichtung mit Grundplatte und einteiliger Klemmrolle
- Fig. 2:: Steigleitungssicherungs-Vorrichtung mit Flachkabel unter Verwendung der mehrteiligen Klemmrolle beim Abschmelzen oder Abbrennen der Leitungsadern; Aufsicht; Ausführung für Wandbefestigung durch Schauben mit Grundplatte
- Fig. 3:: Steigleitungssicherungs-Vorrichtung mit exzentrischem Klemmelement auf Profilschiene, bei Neuinstallation
- Fig. 3a:: Eindrehen der Verdrehsicherung in die Profilschiene
- Fig. 3b:: Flachkabel in Verdrehsicherung fixiert, Aufbringen der Steigleitungssicherungs-Vorrichtung mit exzentrischen Klemmelementen, Ausführung mit Befestigungsvorrichtung für Profilschiene mit Hakenausformung

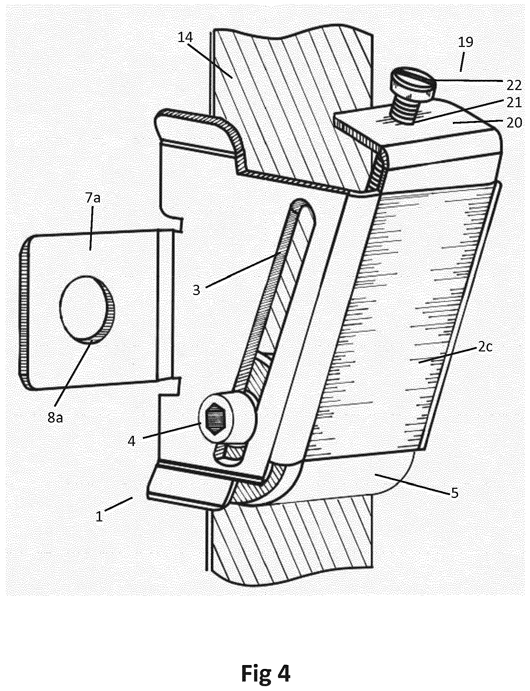

- Fig. 4:: Steigleitungssicherungs-Vorrichtung für Flachkabel mit Schraubensicherung; Seitenansicht; Ausführung mit Befestigungsvorrichtung für Wandbefestigung mit Schrauben
- Fig. 5:: Schrägführung mit Einhängemechanismus

### BESCHREIBUNG VON AUSFÜHRUNGSBEISPIELEN ANHAND DER ZEICHNUNG

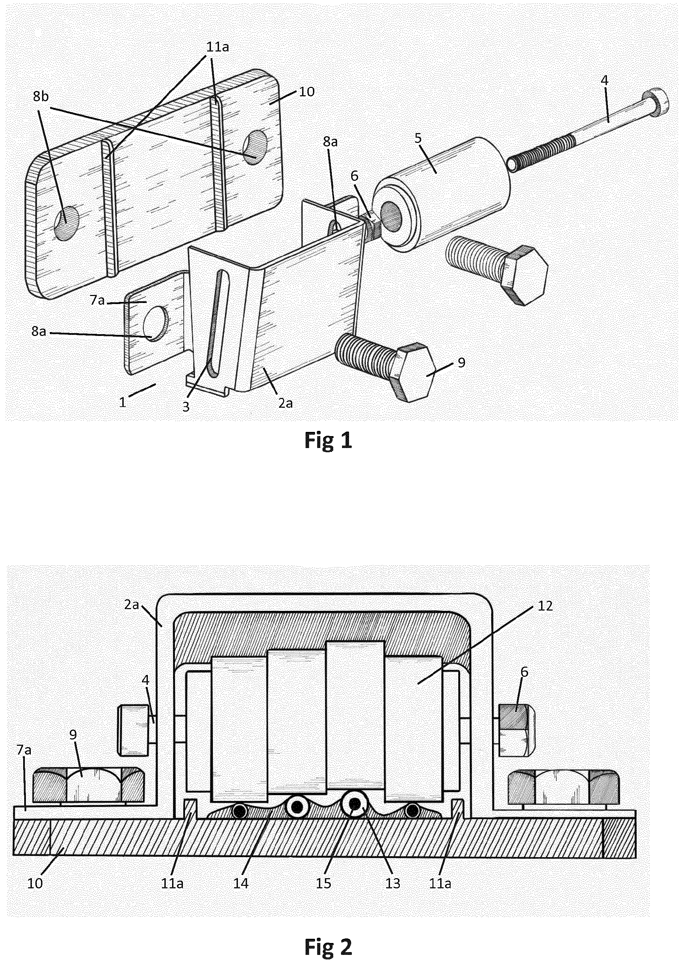

Fig 1 zeigt einen Aufbau der Steigleitungssicherungs-Vorrichtung der Steigleitung als Explosionszeichnung. Die Haltevorrichtung 1 verfügt in diesem Ausführungsbeispiel über einen Nirobügel 2a der eine Schrägführung 3 aufweist, in welcher über eine Achse des Klemmelements 4 eine einteilige Keramikrolle 5 als Klemmelement abstandsvariabel und frei beweglich eingehängt wird. Die Achse des Klemmelements 4 wird mittels einer Sicherungsmutter 6 in der Schrägführung 3 frei beweglich verankert. Die Befestigungsvorrichtung 7a ist in diesem Ausführungsbeispiel für das Verschrauben an einem feuerfesten Hintergrund wie einer Brandschutzwand vorgesehen, und verfügt über Schraubenlöcher 8a sowie feuerbeständige Schrauben 9. Eine Grundplatte 10 ist unter dem Steigleitungs-Flachkabel montiert. Sie verfügt über zwei senkrecht verlaufende Keramikschienen 11a und entsprechende Schraubenlöcher 8b. Bei der Montage mit Grundplatte 10, wird diese hinter dem Steigleitungs-Flachkabel, und die Steigleitungssicherungs-Vorrichtung auf dem Steigleitungs-Flachkabel platziert. Dann werden die feuerbeständigen Schrauben 9 sowohl durch die Schraubenlöcher 8a der Befestigungsvorrichtung 7a der Haltevorrichtung 1, sowie die Schraubenlöcher 8b der Grundplatte 10 geführt, und auf dem feuerfesten Hintergrund verschraubt.

In Fig 2 ist die Steigleitungssicherungs-Vorrichtung mit mehrteiliger Klemmrolle und Grundplatte 10 in Aufsicht gezeigt. Auf der Achse des Klemmelements 4 sind mehrere Klemmrollen 12 aufgereiht. Schmelzen im Brandfall die Aderummantelungen 13 der einzelnen Kabeladern 15 des Steigleitungs-Flachkabels 14 unterschiedlich ab, so können sich die Klemmrollen 12 an die unterschiedlichen Höhen des Flachkabels 14 anpassen. So werden die einzelnen Kabeladern 15 bis zum vollständigen Abschmelzen oder Abbrennen der Ummantelung 13 an die Grundplatte 10 geklemmt. Durch die Schienen 11a der Grundplatte 10 wird eine Berührung der Kabeladern 15 mit dem Bügel 2a verhindert.

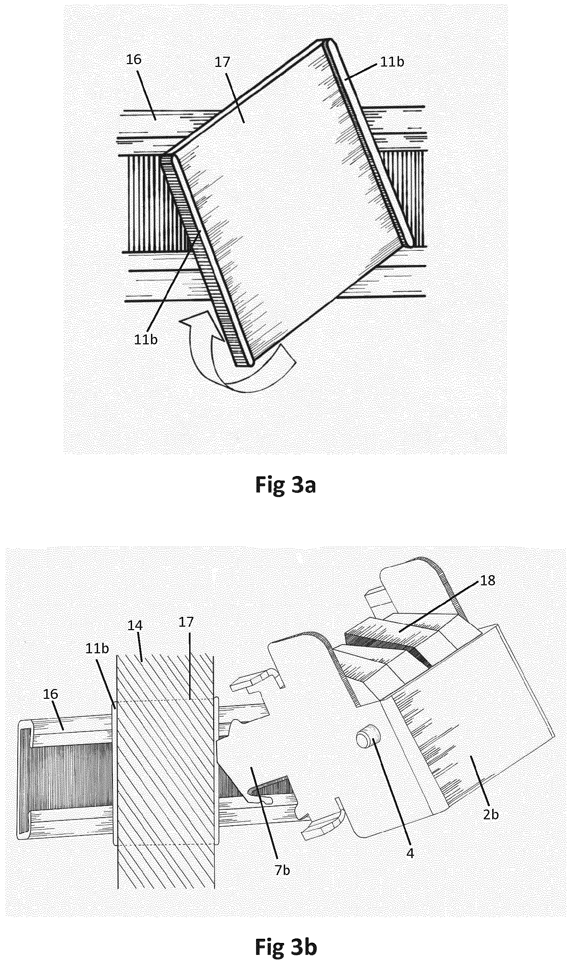

Um die Steigleitungssicherungs-Vorrichtung an einer Profilschiene 16 zu befestigen, wird, wie in Fig. 3a gezeigt, zunächst eine nicht leitende, feuerbeständige Verdrehsicherung 17 in die Profilschiene 16 eingedreht. Die Verdrehsicherung gewährleistet durch seitliche Keramikschienen 11b eine korrekte Positionierung des Flachkabels 14 und verhindert einen Kontakt der Leitungsadern 15 (ähnlich Fig 2) mit dem Bügel 2b oder der Profilschiene 16.

Ist das Flachkabel 14 in der Verdrehsicherung 17 positioniert, wie in Fig. 3b gezeigt, so kann die Steigleitungssicherungs-Vorrichtung durch die Befestigungsvorrichtung mit Hakenausformung 7b in die Profilschiene 16 auf dem positionierten Flachkabel 14 eingehakt werden.

Des Weiteren ist in diesem Ausführungsbeispiel die Steigleitungssicherungs-Vorrichtung mit exzentrischen Klemmelementen 18 gezeigt. Über eine Achse des Klemmelements 4 sind an einer festen Position mehrere unabhängige exzentrische Klemmelemente 18 stufenlos rotationsbeweglich aufgereiht. Ebenso wie bei der mehrteiligen Klemmrolle, können die einzelnen Klemmelemente 18 unterschiedliche Höhen klemmen.

Ein weiteres Ausführungsbeispiel zeigt die Steigleitungssicherungs-Vorrichtung mit einer Schraubensicherung 19 mit welcher das Steigleitungs-Flachkabel 14 bei Verlegung zwischen zwei Steigleitungssicherungs-Vorrichtungen gestrafft werden kann. Die Schraubensicherung 19 besteht aus einer Schraubenhalterung 20, welche als Verlängerung der Haltevorrichtung 1 oberhalb des Bügels 2c im rechten Winkel zur Schrägführung 3 abknickt und ein Schraubenloch mit Gewinde 21 aufweist. In Schraubenloch 21 ist parallel zur Schrägführung 3 eine Sicherungsschraube 22 positioniert, welche eine einteilige Klemmrolle 5 von oben fixiert. Dadurch wird das Öffnen der Steigleitungssicherungs-Vorrichtung nach oben verhindert. Dies ermöglicht ein einfacheres Straffen des Steigleitungs-Flachkabels 14zwischen zwei Steigleitungssicherungs-Vorrichtungen in der Steigleitung. Ist das Steigleitungs-Flachkabel 14 in einer unteren Steigleitungssicherungs-Vorrichtung durch die Schraubensicherung 19 fixiert, kann das Steigleitungs-Flachkabel 14 in einer darüber liegenden Steigleitungssicherungs-Vorrichtung zu Straffung gezogen werden, ohne dass sich das fixierte Steigleitungs-Flachkabel 14 löst.

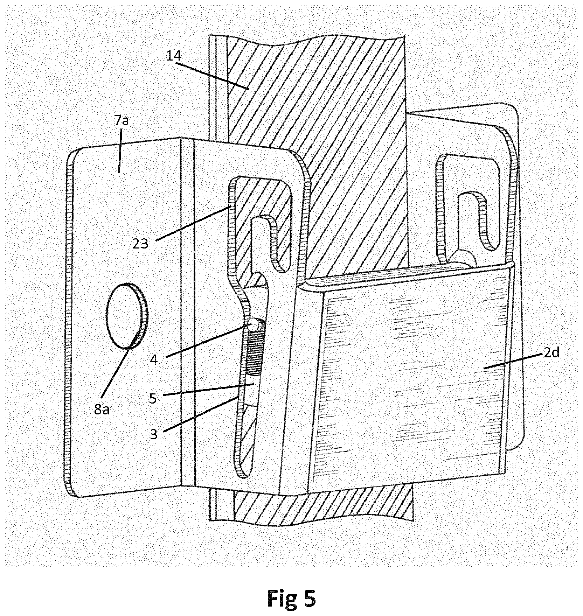

Wie in Fig. 5 gezeigt, kann die Schrägführung 3 ein Einhängefortsatz 23 aufweisen, um die Achse der Klemmrolle 4 samt der Klemmrolle 5 beim Montagevorgang des Flachkabels 14 oberhalb der Schrägführung 3 einzuhängen, sodass sie das Flachkabel 14 beim Montagevorgang nicht klemmt. Auch in dieser möglichen Ausführungsform wird der Nirobügel 2d über die Befestigungsvorrichtung 7a, welche Schraubenlöcher 8a aufweist, auf einem feuerfesten Hintergrund befestigt.

Insgesamt stellt die gegen Abwärtsbewegung gesicherte Steigleitung mit einem vertikal oder mit Vertikalkomponente verlaufenden elektrischen Steigleitungsflachkabel und einer das Flachkabel umfassenden Steigleitungssicherungs-Vorrichtung eine neuartige Steigleitung mit Brandfunktionserhalt E90 für Steigleitungs-Flachkabel dar.

## Patentansprüche

1. Gegen Abwärtsbewegung gesicherte Steigleitung (14), mit einem vertikal oder mit Vertikalkomponente verlaufenden elektrischen Steigleitungs-Flachkabel (14) und wenigstens einer das Flachkabel umfassenden Steigleitungssicherungs-Vorrichtung zur Sicherung des Steigleitungs-Flachkabels (14) gegen Abwärtsbewegung im Nichtbrandfall sowie im Brandfall durch Andruck des Flachkabels (14) gegen eine nicht-leitende Andruckfläche (10),
wobei die Steigleitungssicherungs-Vorrichtung ein elektrisch nicht leitendes, Klemmelement (4) im Abstand zur Andruckfläche (10) umfasst, das frei beweglich in einer Schrägführung (3) geführt ist, die bei Abwärtsbewegung des Klemmelements (4) den Abstand des Klemmelements (4) zur Andruckfläche (10) verringert;
wobei bei auf das Flachkabel (14) wirkender Abwärts-Zugkraft das Flachkabel (14) durch das in der Schrägführung frei bewegliche und dadurch gegenüber der Andruckfläche (10) abstandsvariable Klemmelement (4) auch bei Änderung der Kabeldicke gegen die Andruckfläche (10) drückbar und hierdurch zwischen Klemmelement (4) und Andruckfläche (10) klemmbar ist, wobei die Abstandsvariabilität der Klemmung wenigstens dem Unterschied zwischen der Dicke des Flachkabels (14) im unversehrten Zustand und der Dicke des Flachkabels (14) im Zustand abgeschmolzener oder abgebrannter Kabelisolation entspricht,
wobei die Steigleitungssicherungs-Vorrichtung eine Grundplatte (10) umfasst, welche als Andruckfläche (10) fungiert,
**dadurch gekennzeichnet, dass** das Klemmelement (4) feuerbeständig ist,
wobei das Klemmelement (4) als Klemmrolle (5) ausgebildet ist,
wobei die Grundplatte (10) der Steigleitungssicherungs-Vorrichtung eine nicht leitende, feuerbeständige Grundplatte (10) ist.

2. Steigleitung nach Anspruch 1, wobei das Klemmelement (4) als einteilige Klemmrolle (5) ausgebildet ist.

3. Steigleitung nach Anspruch 1, wobei das Klemmelement (4) als mehrteilige Klemmrolle ausgebildet ist,
wobei die mehrteilige Klemmrolle mehrere auf einer Achse nebeneinander aufgereihte, unabhängige Einzelklemmrollen (12) umfasst.

4. Steigleitung nach einem der Ansprüche 1 bis 3, wobei die Steigleitung eine Haltevorrichtung (1) mit einer Schraubensicherung (19) umfasst,
wobei die Schraubensicherung (19) in Richtung der Schrägführung (3), in welcher die Klemmrolle (5) abstandsvariabel und frei beweglich aufgehängt ist, die Klemmrolle (5) in geschlossenem Zustand nach oben hin in der Auslenkung beschränkt.

5. Steigleitung nach einem der Ansprüche 1 bis 4, wobei die Steigleitungssicherungs-Vorrichtung eine Haltevorrichtung mit einem Kabelbinder umfasst, wobei das Klemmelement (4) mittels des Kabelbinders bei der Montage der Steigleitungssicherungs-Vorrichtung an der Steigleitung (14) in einer obersten Position der Schrägführung (3) gehalten werden kann.

6. Steigleitung nach einem der Ansprüche 1 bis 5, wobei die Steigleitungssicherungs-Vorrichtung eine Haltevorrichtung (1) mit einem sich oberhalb an die Schrägführung (3) anschließenden Einhängemechanismus (23) umfasst, in welche die Achse der Klemmrolle (4) in einer Position oberhalb der Schrägführung (3) eingehängt werden kann.

7. Steigleitung nach Anspruch 1, wobei das Klemmelement (4) als exzentrisches Klemmelement (18) ausgebildet ist.

8. Steigleitung nach Anspruch 7, wobei das exzentrische Klemmelement (18) als mehrteiliges exzentrisches Klemmelement ausgebildet ist, welches mehrere, nebeneinander angeordnete unabhängige exzentrische Einzelklemmelemente umfasst.

9. Steigleitung nach Anspruch 7 oder 8, wobei das exzentrische Klemmelement (18) oder die exzentrischen Einzelklemmelemente stufenlos rotationsbeweglich an der Achse des Klemmelements an einer Haltevorrichtung (1) befestigt sind, wobei die Achse des Klemmelements (4) an einer festen Position in der Haltevorrichtung (1) angebracht ist.

10. Steigleitung nach einem der Ansprüche 1 bis 9,
wobei die Steigleitungssicherungs-Vorrichtung eine auf eine Profilschiene (16) aufgesetzte nicht leitende, feuerbeständige Verdrehsicherung (17) umfasst
wobei die Befestigungsvorrichtung eine Hakenausformung (7b) zum Einhängen in die Profilschiene (16) aufweist.

11. Elektrische Installation, umfassend eine gegen Abwärtsbewegung gesicherte Steigleitung (14), mit einem vertikal oder mit Vertikalkomponente verlaufenden elektrischen Steigleitungs-Flachkabel (14) und wenigstens einer das Flachkabel umfassenden Steigleitungssicherungs-Vorrichtung nach einem der Ansprüche 1 - 10, wobei
(i) die Steigleitungssicherungs-Vorrichtung an einer Bauwerkswand montiert ist, die die isolierende Andruckfläche (10) als Gegenstück zum Klemmelement (4) bildet, oder
(ii) die Steigleitungssicherungs-Vorrichtung mit einer isolierende Andruckfläche als Gegenstück zum Klemmelement (4) ausgerüstet ist, die einen Teil der Steigleitungssicherungs-Vorrichtung selbst bildet.

## Claims

1. Riser (14) which is protected against downward movement, with an electrical riser ribbon cable (14) which runs vertically or with a vertical component, and with at least one riser-securing device which surrounds the ribbon cable and has the purpose of securing the riser ribbon cable (14) against downward movement when there is not a fire and when there is a fire, by pressing the ribbon cable (14) against a non-conductive pressing face (10),
wherein the riser-securing device comprises an electrically non-conductive clamping element (4) at a distance from the pressing face (10), which clamping element (4) is guided in a freely movable fashion in an oblique guiding means (3) which reduces the distance between the clamping element (4) and the pressing face (10) when the clamping element (4) moves downwards;
wherein when there is a downward tensile force acting on the ribbon cable (14) the ribbon cable (14) can be pressed, even when the cable thickness changes, against the pressing face (10) by the clamping element (4) which is freely movable in the oblique guiding means and as a result it is a variable distance from the pressing face (10), and as a result can be clamped between the clamping element (4) and the pressing face (10), wherein the variability in respect of distances in the clamping connection corresponds at least to the difference the thickness of the ribbon cable (14) in the intact state and a thickness of the ribbon cable (14) in the state in which cable insulation has been melted off or burnt off,
wherein the riser-securing device comprises a baseplate (10) which functions as a pressing face (10),
**characterized in that** the clamping element (4) is fire-resistant,
wherein the clamping element (4) is embodied as a clamping roller (5),
wherein the baseplate (10) of the riser-securing device is a non-conductive, fire-resistant baseplate (10).

2. Riser according to Claim 1, wherein the clamping element (4) is embodied as a single-part clamping roller (5).

3. Riser according to Claim 1, wherein the clamping element (4) is embodied as a multi-part clamping roller,
wherein the multi-part clamping roller comprises a plurality of independent individual clamping rollers (12) which are arranged one next to the other on an axle.

4. Riser according to one of Claims 1 to 3, wherein the riser comprises a mounting device (1) with a screw-securing means (19),
wherein the screw-securing means (19) limits the clamping roller (5) upwardly in terms of deflection in the closed state, in the direction of the oblique guiding means (3) in which the clamping roller (5) is suspended in a variable fashion in respect of distance and freely movably.

5. Riser according to one of Claims 1 to 4, wherein the riser-securing device comprises a mounting device with a cable tie, wherein the clamping element (4) can be mounted in an uppermost position of the oblique guiding means (3) by means of the cable tie when the riser-securing device is mounted on the riser (14).

6. Riser according to one of Claims 1 to 5, wherein the riser-securing device comprises a mounting device (1) with an engagement element (23) which adjoins the oblique mounting means (3) at the top and into which the axle of the clamping roller (4) can be engaged in a position above the oblique guiding means (3).

7. Riser according to Claim 1, wherein the clamping means (4) is embodied as an eccentric clamping element (18).

8. Riser according to Claim 7, wherein the eccentric clamping element (18) is embodied as a multi-part eccentric clamping element which comprises a plurality of independent eccentric individual clamping elements which are arranged one next to the other.

9. Riser according to Claim 7 or 8, wherein the eccentric clamping element (18) or the eccentric individual clamping elements are attached to a mounting device (1) in a continuously rotationally movable fashion on the axle of the clamping element, wherein the axle of the clamping element (4) is provided at a fixed position in the mounting device (1).

10. Riser according to one of Claims 1 to 9,
wherein the riser-securing device comprises a non-conductive, fire-resistant anti-rotation device (17) which is fitted onto a profiled rail (16),
wherein the attachment device has a hook projection (7b) for engagement in the profile rail (16) .

11. Electrical installation comprising a riser (14) which is secured against downward movement, with an electric riser ribbon cable (14) which runs vertically or with a vertical component, and with at least one riser-securing device which comprises the ribbon cable, according to one of Claims 1 to 10,
wherein
(i) the riser-securing device is a mounted on a building wall which forms the insulating pressing face (10) as a corresponding element for the clamping element (4),
or
(ii) the riser-securing device is equipped with an insulated pressing face as the corresponding element for the clamping element (4), which pressing face forms part of the riser-securing device itself.

## Revendications

1. Colonne montante (14) bloquée pour empêcher un déplacement vers le bas, avec un câble plat de colonne montante (14) électrique s'étendant verticalement ou avec une composante verticale et au moins un dispositif de blocage de colonne montante comprenant le câble plat pour bloquer le câble plat de colonne montante (14) pour empêcher le déplacement vers le bas en cas de non incendie et en cas d'incendie par compression du câble plat (14) contre une face de compression (10) non conductrice,
dans laquelle le dispositif de blocage de colonne montante comprend un élément de serrage (4) électriquement non conducteur à distance par rapport à la face de compression (10), qui est guidé de manière librement mobile dans un guide oblique (3), qui réduit la distance de l'élément de serrage (4) par rapport à la face de compression (10) lors du déplacement vers le bas de l'élément de serrage (4) ;
dans laquelle en présence d'une force de traction vers le bas agissant sur le câble plat (14), le câble plat (14) peut être poussé contre la face de compression (10) par l'élément de serrage (4) librement mobile dans le guide oblique et présentant de ce fait une distance variable par rapport à la face de compression (10) également en cas de modification de l'épaisseur de câble et peut être serré dans le cas présent entre l'élément de serrage (4) et la face de compression (10), dans lequel la variabilité de distance du serrage correspond au moins à la différence entre l'épaisseur du câble plat (14) dans l'état intact et l'épaisseur du câble plat (14) dans l'état d'une isolation de câble fondue ou brûlée,
dans laquelle le dispositif de blocage de colonne montante comprend une plaque de base (10), laquelle fait office de face de compression (10),
**caractérisée en ce que** l'élément de serrage (4) est résistant au feu,
dans laquelle l'élément de serrage (4) est réalisé en tant que rouleau de serrage (5),
dans laquelle la plaque de base (10) du dispositif de blocage de colonne montante est une plaque de base (10) non conductrice résistante au feu.

2. Colonne montante selon la revendication 1, dans laquelle l'élément de serrage (4) est réalisé en tant qu'un rouleau de serrage (5) en une partie.

3. Colonne montante selon la revendication 1, dans laquelle l'élément de serrage (4) est réalisé en tant que rouleau de serrage en plusieurs parties,
dans laquelle le rouleau de serrage en plusieurs parties comprend plusieurs rouleaux de serrage individuels (12) indépendants alignés côte à côte sur un axe.

4. Colonne montante selon l'une quelconque des revendications 1 à 3, dans laquelle la colonne montante comprend un dispositif de maintien (1) avec un blocage par vissage (19),
dans laquelle le blocage par vissage (19) limite dans la déviation vers le haut dans un état fermé le rouleau de serrage (5) en direction du guide oblique (3), dans lequel le rouleau de serrage (5) présente une distance variable et est suspendu de manière librement mobile.

5. Colonne montante selon l'une quelconque des revendications 1 à 4, dans laquelle le dispositif de blocage de colonne montante comprend un dispositif de maintien avec un serre-câbles, dans laquelle l'élément de serrage (4) peut être maintenu au moyen du serre-câbles lors du montage du dispositif de blocage de colonne montante sur la colonne montante (14) dans une position la plus haute du guide oblique (3).

6. Colonne montante selon l'une quelconque des revendications 1 à 5, dans laquelle le dispositif de blocage de colonne montante comprend un dispositif de maintien (1) avec un mécanisme de suspension (23) se raccordant au-dessus du guide oblique (3), dans lequel l'axe du rouleau de serrage (4) peut être suspendu dans une position au-dessus du guide oblique (3).

7. Colonne montante selon la revendication 1, dans laquelle l'élément de serrage (4) est réalisé en tant qu'élément de serrage (18) excentrique.

8. Colonne montante selon la revendication 7, dans laquelle l'élément de serrage (18) excentrique est réalisé en tant qu'un élément de serrage excentrique en plusieurs parties, lequel comprend plusieurs éléments de serrage individuels excentriques indépendants disposés côte à côte.

9. Colonne montante selon la revendication 7 ou 8, dans laquelle l'élément de serrage (18) excentrique ou les éléments de serrage individuels excentriques sont fixés en continu avec une mobilité en rotation sur l'axe de l'élément de serrage sur un dispositif de maintien (1), dans laquelle l'axe de l'élément de serrage (4) est installé sur une position fixe dans le dispositif de maintien (1).

10. Colonne montante selon l'une quelconque des revendications 1 à 9,
dans laquelle le dispositif de blocage de colonne montante comprend un blocage anti-rotation (17) résistant au feu non conducteur placé sur un rail profilé (16),
dans laquelle le dispositif de fixation présente une formation en crochet (7b) destiné à être suspendue dans le rail profilé (16).

11. Installation électrique comprenant une colonne montante (14) bloquée pour empêcher tout déplacement vers le bas, avec un câble plat de colonne montante (14) électrique s'étendant verticalement ou avec une composante verticale et au moins un dispositif de blocage de colonne montante comprenant le câble plat selon l'une quelconque des revendications 1 - 10, dans laquelle
(i) le dispositif de blocage de colonne montage est monté sur un mur d'ouvrage de construction, qui forme la face de compression (10) isolante en tant que contre-pièce par rapport à l'élément de serrage (4)
ou
(ii) le dispositif de blocage de colonne montante est équipé d'une face de compression isolante en tant que contre-pièce par rapport à l'élément de serrage (4), qui forme une partie du dispositif de blocage de colonne montante lui-même.
